# EUROPÄISCHE PATENTSCHRIFT

(11) **EP 0 428 655 B1**
(45) Veröffentlichungstag und Bekanntmachung des Hinweises auf die Patenterteilung: **03.08.1994**
(21) Anmeldenummer: 90906986.6
(22) Anmeldetag: 10.05.1990
(51) Int. Cl.: F16D 55/227, F16D 65/097

(54) **TEILBELAG-SCHEIBENBREMSE, INSBESONDERE FÜR KRAFTFAHRZEUGE**
PARTIALLY LINED DISK BRAKE, IN PARTICULAR FOR MOTOR VEHICLES
FREIN A DISQUE A GARNITURE PARTIELLE, EN PARTICULIER POUR VEHICULES AUTOMOBILES

(30) Priorität: 10.06.1989 DE 3919054; 23.12.1989 DE 3942802
(43) Veröffentlichungstag der Anmeldung: 29.05.1991
(73) Patentinhaber: ITT Automotive Europe GmbH, 60488 Frankfurt (DE)
(72) Erfinder: WEILER, Rolf, D-6239 Eppstein 2 (DE); STÖRZEL, Karl, D-6072 Dreieich (DE); CEYLAN, Ahmet, D., D-6000 Frankfurt/Main (DE)
(86) Internationale Anmeldenummer: EP9000749
(87) Internationale Veröffentlichungsnummer: WO9015266

(56) Entgegenhaltungen:
- EP-A- 0 032 462
- DE-A- 2 458 354
- DE-A- 2 513 131
- DE-B- 1 580 054
- DE-U- 8 519 567
- US-A- 3 346 075
- US-A- 3 374 866

## Beschreibung

Die Erfindung betrifft eine Teilbelag-Scheibenbremse für Kraftfahrzeuge, gemäß dem Oberbegriff des Patentanspruches 1.

Aus der DE-U-85 19 561 ist eine gattungsgemäße Scheibenbremse bekannt, bei der die Bremsbacken an einem mittleren Haltestift befestigt sind und mit seitlichen Ansätzen zwei weitere am Bremsgehäuse befestigte Stifte umgreifen, über die die beim Bremsen auftretenden Umfangskräfte von den Bremsbacken auf das Bremsgehäuse übertragen werden. Diese Anordnung benötigt zur Halterung und Abstützung der Bremsbacken drei Stifte. Weiterhin besitzen die seitlichen Ansätze der Bremsbacken ebene Abstützflächen, die bei Anlage an den zylindrischen Außenflächen der seitlichen Stifte stark beansprucht werden und relativ schnell verschleißen.

Aufgabe der Erfindung ist es, eine Teilbelag-Scheibenbremse anzugeben, bei der die Halterung der Bremsbacken einfacher ausgestaltet und die Kraftaufnahme für die Umfangskräfte verbessert ist.

Diese Aufgabe wird erfindungsgemäß dadurch gelöst, daß die Ansätze der Bremsbacken einen sichelförmigen Abschnitt mit einer teilkreisförmigen Anlagefläche aufweisen, der die Belaghaltestifte umgreift. Damit wird vorteilhaft die Kontaktfläche zwischen den Ansätzen und den Belaghaltestiften vergrößert, wobei der Verschleiß verringert wird, und gleichzeitig die Bremsbacke gehaltert, ohne daß ein weiterer Haltestift erforderlich wäre.

Eine besonders vorteilhafte Ausführungsform der Erfindung sieht vor, daß das Bremsgehäuse im Brückenbereich Ausnehmungen aufweist, in denen die Belaghaltestifte angeordnet sind. Auf diese Weise wird eine besonders platzsparende Anordnung erreicht, die auch kräftemäßig vorteilhaft ist.

Gemäß einer weiteren bevorzugten Ausführungsform weist die Bremse im Brückenabschnitt eine zentrale Ausnehmung auf. In diese Ausnehmung greift gemäß weiteren Ausführungsformen eine zwischen Bremsgehäuse und Bremsbacken angeordnete Niederhaltefeder ein. Diese Feder bildet einen rahmenförmigen Abschnitt, der einen Ansatz aufweist, zum Eingriff in eine im Bremsgehäuse vorgesehene Ausnehmung.

In einer weiteren vorteilhaften Ausführungsform ist eine Niederhaltefeder gemäß den Merkmalen des Anspruchs 11 ausgebildet. Mit Hilfe der sich kreuzförmig überlappenden Federschenkel ist erreicht, daß die Abstützpunkte sowohl des Bremsgehäuses als auch der Bremsbacken nahe der Symmetrieachse liegen. Durch die Länge der Federschenkel ist auch eine weiche Kennlinie erzielbar. Aufgrund der Abstützung an der radial innenliegenden Fläche des Bremsgehäuses ist das Bremsgehäuse über der äußeren Bremsbacke geschlossen ausgeführt. Damit wird eine Versteifung des Bremsgehäuses erreicht.

Wenn die Enden der Streben als sich axial erstreckende Schenkel ausgeführt sind, so sind über die Umfangsrichtung betrachtet, die Enden der Streben punktförmig an dem Bremsgehäuse abgestützt. Damit ist vorteilhaft der in Umfangsrichtung verfügbare Einbauraum einzig zur Aufbringung der Federkraft genutzt. Des weiteren wird vorteilhaft mit Hilfe der sich axial erstreckenden im Querschnitt kreisförmigen Schenkel ein Gleiten der Enden an der Bremsgehäusefläche ermöglicht.

Mit Hilfe der die beiden Schenkel verbindenden Querverbindung über der äußeren Bremsbacke ist vorteilhaft die Lage der sich kreuzförmig überlappenden Querstreben zueinander definiert, so daß vorteilhaft eine symmetrische Federwirkung auf die Bremsbacke erzielbar ist.

In einer Weiterbildung der Erfindung ist die Niederhaltefeder mit einem axial über die Betätigungseinheit ragenden Endabschnitt versehen, der an einem radial sich erhebenden Noppen des Betätigungsgehäuses befestigt ist.

Vorteilhaft sind auch im Bereich über der inneren Bremsbacke zwei sich kreuzförmig überlappende Streben vorgesehen, deren Enden sich an dem Bremsgehäuse abstützen, so daß vorteilhaft auf die innere Bremsbacke dieselbe Kraft einwirkt, wie auch auf die äußere Bremsbacke.

Die innenliegende Abstützfläche des Bremsgehäuses begrenzt eine kreissegmentförmige Ausnehmung, so daß vorteilhaft die Niederhaltefeder in der Symmetrieachse der Teilbelag-Scheibenbremse zentrierbar ist.

Ist der in einem Bereich oberhalb der inneren Bremsbacke liegende Endabschnitt mit in Umfangsrichtung beabstandeten sich axial erstreckenden Schenkeln ausgeführt, so stützen sich große Oberflächen an dem Bremsgehäuse ab, die vorteilhaft gegeneinander gleitbar sind. Damit ist eine einfache selbstjustierende Zentrierung erzielbar. Des weiteren ist vorteilhaft durch die Bewegung zwischen Bremsgehäuse und Feder eine Ausbildung von Korrosion verhindert.

In einer einfachen Ausgestaltung umschlingt der Endabschnitt der Feder den Noppen mit einer Öse.

In einer weiteren einfachen Ausgestaltung endet die Niederhaltefeder im Bereich der Öse mit ihren zwei Enden, die somit den Noppen federnd umklammern können. In weiteren einfachen Ausgestaltungen sind die Enden entweder verschweißt oder verlötet.

Zur Erzielung einer besseren federnden Umklammerung ist im Bereich des Noppens eine kreuzförmige Überlappung vorgesehen, so daß die freien Enden der Öse den Noppen federnd umklammern.

Dabei sind in einer einfachen Ausführungsform die Enden auf der Rückseite des Noppens übereinandergelegt und enden frei.

Wenn die Öse den Noppen mit geringem Axialspiel umgreift und die Streben des Endabschnittes zumindest im Bereich der inneren Bremsbacke teilweise auf dem Betätigungsgehäuse aufliegen, so ist eine einfache Halterung der Niederhaltefeder an dem Betätigungsgehäuse erzielt, so daß die Feder vorteilhaft unverlierbar an dem Bremsgehäuse befestigt ist.

In einer einfachen Ausgestaltung sind der Noppen und die Öse rechteckförmig ausgebildet.

Ausführungsbeispiele der Erfindung sind in der Zeichnung dargestellt und im folgenden beschrieben.

Es zeigen:
- Fig. 1: eine Draufsicht auf eine erste Ausführungsform einer Teilbelag-Scheibenbremse;
- Fig. 2: eine Vorderansicht der in Fig. 1 dargestellten Teilbelag-Scheibenbremse, teilweise geschnitten;
- Fig. 3: einen Längsschnitt durch die in den Fig. 1 und 2 dargestellte Teilbelag-Scheibenbremse; und
- Fig. 4: schematisch eine Draufsicht auf eine zweite Ausführungsform einer Teilbelag-Scheibenbremse,
- Fig. 5: eine vergrößerte Darstellung einer Feder, wie sie bei der Ausführungsform gem. Fig. 1 bis 4 zweckmäßig Verwendung findet,
- Fig. 6: eine Draufsicht auf die Feder gemäß Fig. 5,
- Fig. 7: eine Draufsicht auf eine weitere Teilbelag-Scheibenbremse mit einer weiteren Feder,
- Fig. 8: eine Vorderansicht der in Fig. 1 dargestellten Teilbelag-Scheibenbremse mit der Feder, teilweise geschnitten,
- Fig. 9: einen Längsschnitt durch die in den Fig. 7 und 8 dargestellten Teilbelag-Scheibenbremse mit der Feder,
- Fig. 10: eine Seitenansicht der Feder,
- Fig. 11: eine Draufsicht der Feder,
- Fig. 12: eine Seitenansicht einer zweiten Ausführungsform der Feder,
- Fig. 13: eine Draufsicht der in Fig. 12 dargestellten Feder,
- Fig. 14: eine Vorderansicht der in den Fig. 12 und 13 dargestellten Feder und
- Fig. 15: eine Vorderansicht der Feder, teilweise geschnitten.

In den Figuren sind gleiche bzw. einander entsprechende Bauteile der Übersichtlickeit wegen mit gleichen Bezugszeichen versehen.

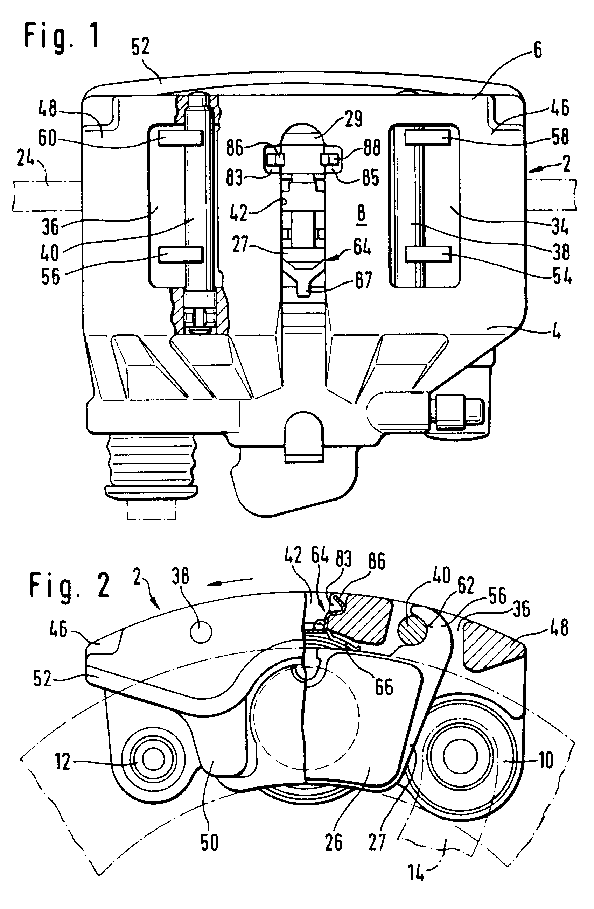

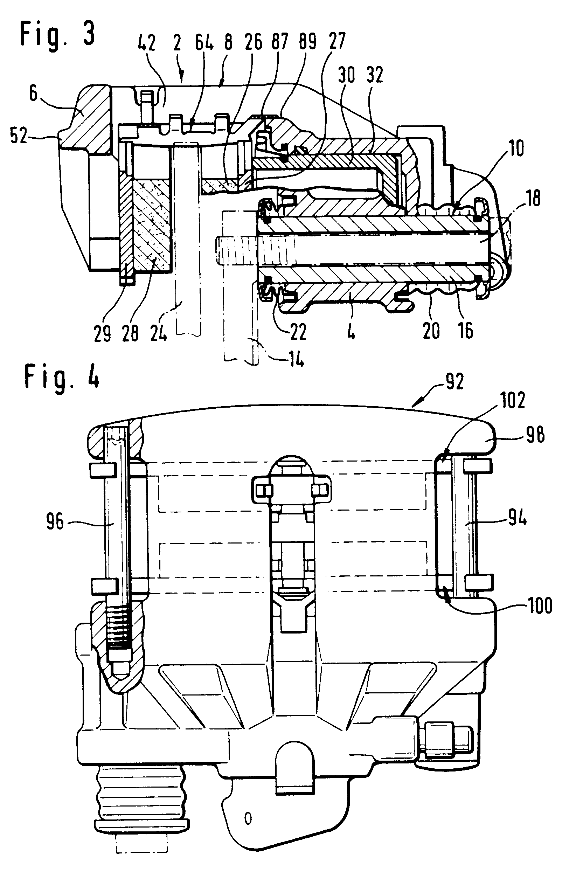

Es wird zunächst auf die in den Fig. 1 bis 3 dargestellte erste Ausführungsform einer Teilbelag-Scheibenbremse Bezug genommen. Die Teilbelag-Scheibenbremse, die hier als integrierte Scheibenbremse dargestellt ist, weist ein U-förmiges Bremsgehäuse 2 auf, welches von zwei sich im wesentlichen radial erstreckenden Schenkeln 4,6 und einem diese verbindenden Brückenabschnitt 8 gebildet ist. Das rahmenartige Bremsgehäuse 2 ist auf zwei Führungsbolzen 10,12 axial verschiebbar gelagert. Die Führungsbolzen sind in am Achsschenkel ausgebildete Arme eingeschraubt, von denen hier nur der Arm 14 andeutungsweise dargestellt ist. Der Führungsbolzen 10 (Haupttragebolzen) wird von einer Hülse 16 gebildet, die mittels einer Schraube 18 am Arm 14 festgeklemmt ist, wie in Fig. 3 dargestellt. Die freiliegenden Gleitflächen der Führungsbolzen sind mit faltgenbalgartigen Schutzkappen 20 bzw. 22 abgedeckt.

Das Bremsgehäuse 2 umgreift den Rand einer Bremsscheibe 24 von außen sowie zwei beidseitig der Bremsscheibe angeordnete Bremsbeläge 26 bzw. 28, im folgenden auch Bremsbacken genannt. Der innere Schenkel 4 des Bremsgehäuses, im folgenden auch Betätigungsgehäuse genannt, nimmt eine Betätigungseinrichtung in Form eines hydraulisch betätigbaren Bremskolbens 30 auf, der gegen den inneren Bremsbelag 26 wirkt. Der Bremskolben 30 ist in einer Bohrung 32 gelagert und wird bei Betätigung der Bremse aus dieser herausgeschoben, wodurch zunächst der innere Belag 26 gegen die Bremsscheibe 24 gedrückt wird. Als Reaktion bewegt sich das Bremsgehäuse 2 in der entgegengesetzten Richtung, so daß auch der Bremsbelag 28 zur Anlage an der Bremsscheibe kommt.

Das Bremsgehäuse weist zwei längliche Ausnehmungen bzw. Durchbrüche 34,36 auf, die im Brückenabschnitt 8 angeordnet sind und deren Hauptrichtung im wesentlichen parallel zur Symmetrieachse der Bremse verläuft. In diesen Durchbrüchen 34,36, die sich im wesentlichen über den gesamten Brückenabschnitt erstrecken, sind Belaghaltestifte 38,40 angeordnet, die parallel zur Symmetrieachse der Bremse verlaufen und die mit ihren Enden im Bremsgehäuse 2 gelagert sind. Hierzu sind in den Schenkeln 4,6 Bohrungen vorgesehen, wobei die Belaghaltestifte 46,40 innen mittels Spannelementen in der entsprechenden Bohrung fixiert sind.

Das Bremsgehäuse weist ferner eine zentrale Öffnung bzw. einen zentralen Durchbruch 42 auf, in den eine Feder 64 eingreift. Infolge der Anordnung der Durchbrüche 34,36 verbleiben im Bereich des Brückenabschnittes 8 außenliegende, im Querschnitt etwa dreiecksförmige Abschnitte 46,48, so daß das Bremsgehäuse insgesamt eine rahmenartige Konfiguration bildet. Der äußere Schenkel 6 bildet einen radial außenliegenden durchgehenden Abschnitt, von dem radial nach innen führende Vorsprünge ausgehen, von denen in Fig. 2 nur der Vorsprung 50 sichtbar ist und die eine etwa U-förmige Ausnehmung bilden bzw. begrenzen. Der radial außenliegende durchgehende Abschnitt ist mit einer Versteifungsrippe 52 versehen, die sich gleichfalls insbesondere durchgehend erstreckt.

Die Bremsbeläge 26,28 weisen jeweils eine Rückenplatte 27,29 auf, auf denen ein Reibbelag befestigt ist. Die Rückenplatten 27,29, im folgenden auch Trägerplatten genannt, sind mit Ansätzen 54,56 bzw. 58,60 versehen, die sich radial nach außen erstrecken und die sichelförmige Abschnitte bilden, welche die Belaghaltestifte 38,40 teilweise (etwa bis zu deren Mitte) umgreifen. Die Ansätze 54,56,58,60 verlaufen hierbei ausgehend von der Oberkante der Rückenplatte bezüglich der Symmetrieebene der Bremse unter einem spitzen Winkel schräg nach außen. Sie greifen hierbei in den bezüglich der Belaghaltestifte äußeren Teil der Durchbrüche 34,36 ein und liegen mit einer teilkreisförmigen Anlagefläche, von denen in Fig. 2 nur die Anlagefläche 62 zu sehen ist, an den Belaghaltestiften 38,40 an. Die Ansätze enden innerhalb der Durchbrüche 34,36. Die äußere Begrenzung der Rückenplatten gehen ohne Stufe oder Knick aus einer geradlinigen Begrenzung im Bereich der Reibmassen in eine gekrümmte Begrenzung im Bereich der Ansätze über.

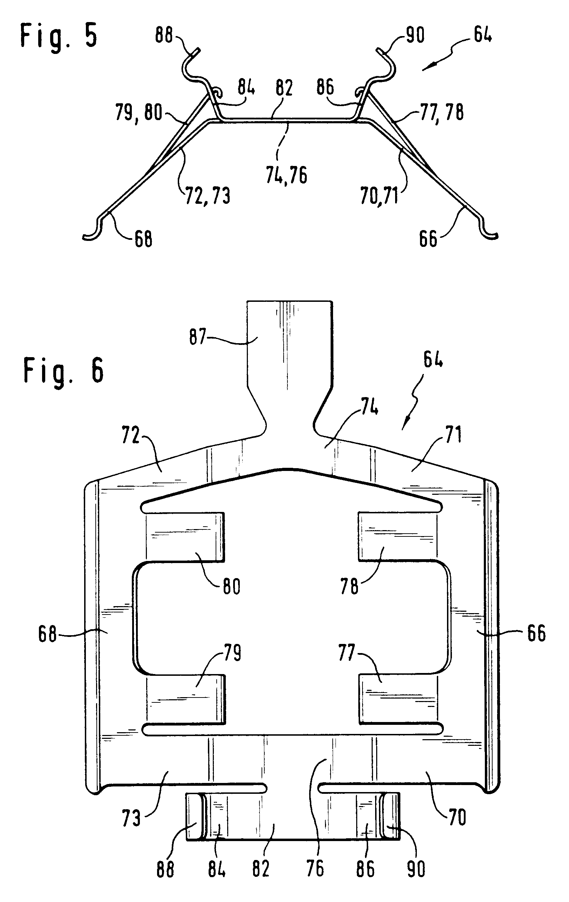

Die zwischen dem Bremsgehäuse 2 und den Bremsbelägen 26,28 angeordnete Feder 64, die in den Fig. 5 und 6 vergrößert dargestellt ist, verspannt die Bremsbeläge gegenüber dem Bremsgehäuse. Die Feder 64 weist einen rahmenförmigen Abschnitt auf, der zwei parallel verlaufende Seitenteile 66,68 bildet, die über Verbindungsabschnitte 70,71,72,73 mit zentralen Teilen 74,76 der Feder verbunden sind. Die Verbindungsabschnitte 70,71,72,73 verlaufen bezüglich der zentralen Teile 74,76 in einem stumpfen Winkel. Die Seitenteile 66,68 bilden außen gekrümmte Abschnitte zur Auflage auf den Bremsbelägen. Ausgehend von den Seitenteilen 66,68 springen vier einander paarweise gegenüberliegende Schenkel 77,78,79,80 in das Innere des rahmenförmigen Abschnittes, die mit ihren gekrümmten Endteilen in die Öffnung 42 ragen.

Aus dem zentralen Teil 76 ist ein Ansatz 82 gebildet, der Schenkel 84,86 aufweist, die sich, ausgehend von einer durch das zentrale Teil 76 gebildeten Bezugsebene in einem Winkel nach oben (Fig. 5) erstrecken. Die Schenkel 84,86 weisen gekrümmte Endabschnitte 88,90 auf zum Durchgriff durch die im Bremsgehäuse 2 vorgesehene Öffnung 42 und Einrasten in angrenzend an die Öffnung 42 ausgebildete muldenartige Ausnehmungen 83,85. Die Feder 64 weist weiterhin eine Zunge 87 auf, die eine Anlagefläche bildet, welche auf einem angrenzend an den Bereich der zentralen Öffnung gebildeten Absatz 89 des Bremsgehäuses aufliegt.

Bei dieser Ausführungsform ist sichergestellt, daß die Bremsbeläge ausschließlich gezogen belastet werden, d.h. bei einer in Drehrichtung, wie sie in Fig. 2 durch einen Pfeil angedeutet ist, werden die in Umfangsrichtung wirksamen Bremskräfte praktisch ausschließlich über den Belaghaltestift 40 übertragen. Vom Belaghaltestift werden die Kräfte in das Bremsgehäuse geleitet und von diesem auf die Bolzenführung übertragen.

Die Belaghaltestifte sind zweckmäßig aus nichtrostendem Stahl hergestellt, so daß auch eine Verbesserung des Korrosionsverhaltens erzielt wird.

Bei der in Fig. 4 dargestellten Ausführungsform bildet das Bremsgehäuse 92 in Umfangsrichtung gesehen außenliegende U-förmige Abschnitte, wobei die Belaghaltestifte 94,96 in den Schenkeln der U-förmigen Abschnitte gelagert sind, von denen einer mit 98 bezeichnet ist. Entsprechend wie bei der Ausführungsform gemäß Fig. 1 bis 3 umgreifen die Rückenplatten der Bremsbeläge 100,102 die Belaghaltestifte 94,96 teilweise von außen her. Die Belaghaltestifte 94,96 sind durch Bohrungen in den außenliegenden Schenkeln geführt und in in den innenliegenden Schenkeln vorgesehene Gewindebohrungen geschraubt. Zum Austausch der Beläge wird einer der Führungsbolzen gelöst und das Bremsgehäuse um den anderen Führungsbolzen geschwenkt. Nach Entfernen eines der Belaghaltestifte 38,40 können die Bremsbeläge herausgenommen werden.

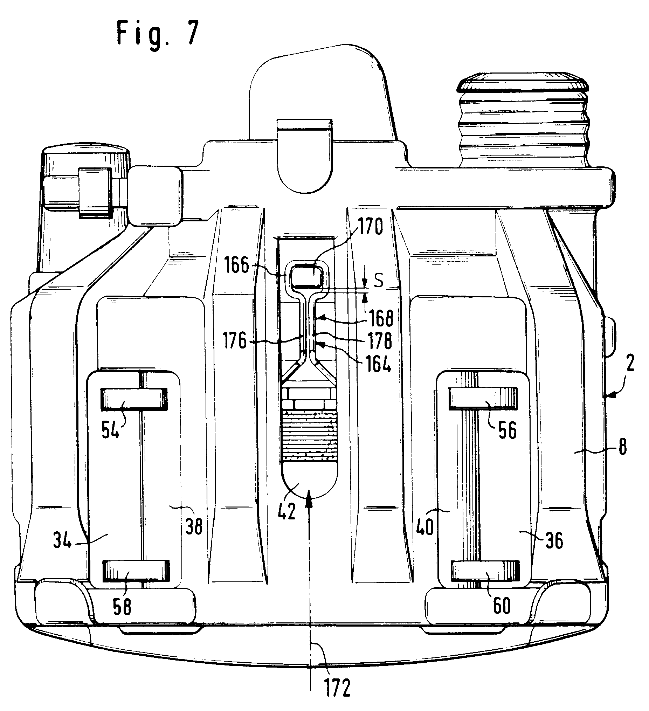

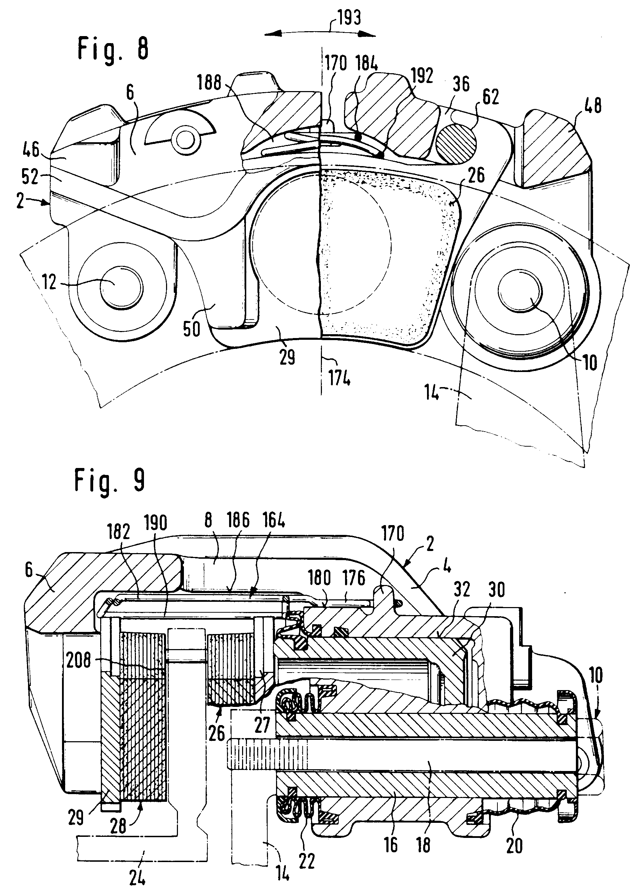

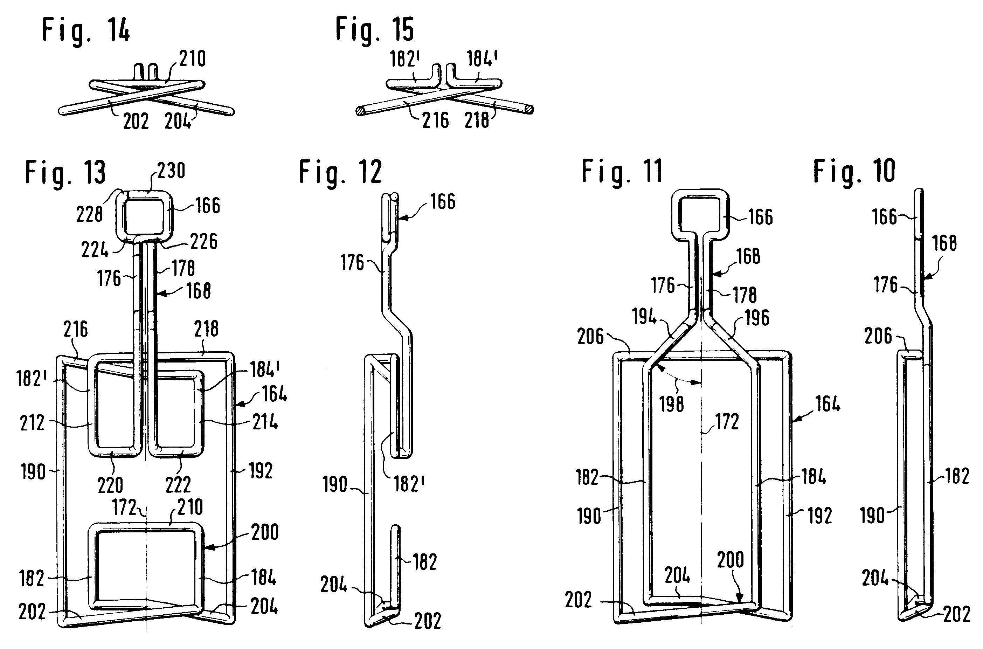

Die Fig. 7, 8 und 9 zeigen eine Feder 164, die mit einer Öse 166 eines Endabschnittes 168 um einen sich radial erhebenden Noppen 170 gelegt ist. Der Noppen 170 erstreckt sich oberhalb des als Betätigungsgehäuses ausgelegten radialen Schenkels 4. Die Teilbelag-Scheibenbremse ist im wesentlichen symmetrisch zu der Symmetrieebenen 172,174 mit den Achsen 172,174 ausgebildet. Parallel nebeneinander verlaufende Stäbe 176,178 des Endabschnittes 168 liegen auf einer Abstützfläche 180 des Betätigungsgehäuses 4 auf. Sich axial erstreckende in Umfangsrichtung 193 beabstandete Schenkel 182,184 der Feder 164 stützen sich an einer innenliegenden Fläche 186 des Brückenabschnittes 8 ab, die eine kreissegmentförmi- ge Ausnehmung 188 in dem Brückenabschnitt 8 begrenzt. Sich axial erstreckende in Umfangsrichtung 193 beabstandete Schenkel 190,192 stützen sich an den Trägerplatten der Bremsbacken 26,28 ab, wobei die Entfernung der Abstützpunkte zur Symmetrieachse 174 geringer ist als die Entfernung des Abstützpunktes zum in Umfangsrichtung äußersten Punkt der Reibbelagmasse. Die Feder ist symmetrisch zu der Symmetrieebenen 172,174 aufgebaut und aus einem einteiligen Federdrahtstück so gebogen, daß die freien Enden hinter dem Noppen liegen und verschweißt oder verlötet sind. Die zwischen dem Bremsgehäuse 2 und den Bremsbelägen 26,28 angeordnete Feder 164, die in den Fig. 10 und 11 vergrößert dargestellt ist, verspannt die Bremsbacken 26,28 gegenüber dem Bremsgehäuse 2.

Die Schenkel 182,184 erstrecken sich in ihrer axialen Länge über beide Bremsbacken 26,28 bis zum Endabschnitt 168. Verbindungsstege 194,196 spreizen sich unter einem Winkel 198 von etwa 45° gegenüber der Symmetrieachse 172 auf und verbinden die nebeneinanderliegenden Stäbe 176,178 mit den Schenkeln 182,184. Über der äußeren Bremsbacke 28 weist die Feder 164 einen Abschnitt 200 mit zwei sich kreuzförmig überlappenden Streben 202 und 204 auf. Die auf den Bremsbacken 26,28 aufliegenden Schenkel 190,192 sind im Bereich der inneren Bremsbacke 26 mit einem sich im wesentlichen in Umfangsrichtung 193 erstreckenden Verbindungssteg 206 untereinander verbunden.

Fig. 12 bis 15 zeigen eine zweite Ausführungsform der Feder 164, wobei die Schenkel 182,184 im Bereich einer Ebenen, die nahe der äußeren Bremsscheibenfläche 208 angeordnet ist, mit einem Verbindungssteg 210 untereinander verbunden sind. Der Endabschnitt 168 weist in einem Bereich oberhalb der inneren Bremsbacke 26 zwei U-förmige Segmente 212,214 auf, deren in Umfangsrichtung beabstandete äußere Schenkel 182,184 im wesentlichen koaxial zu den Schenkeln 182,184 angeordnet sind. Von den Schenkeln 182',184' führen zwei sich kreuzförmig überlappende Streben 216,218 zu den Schenkeln 190,192. Die anderen Schenkel der U-förmigen Segmente 212,214 sind als die parallel zu der Symmetrieachse 172 und zueinander benachbarten Stäbe 176,178 ausgeführt. Die Basis der beiden U-förmigen Segmente 212,214 wird von zwei sich in Umfangsrichtung 193 erstreckenden Schenkeln 220,222 gebildet. Im Bereich der Öse 166 kreuzen sich die Stäbe 176,178, so daß die in Umfangsrichtung 193 verlaufenden Abschnitte 224,226 und 228,230 der Öse 166 in radialer Richtung übereinander angeordnet sind.

### Bezugszeichenliste

- 2: Bremsgehäuse
- 4: Schenkel
- 6: Schenkel
- 8: Brückenabschnitt
- 10: Führungsbolzen
- 12: Führungsbolzen
- 14: Arm
- 16: Hülse
- 18: Schraube
- 20: Schutzkappe
- 22: Schutzkappe
- 24: Bremsscheibe
- 26: Bremsbelag
- 27: Rückenplatte
- 28: Bremsbelag
- 29: Rückenplatte
- 30: Bremskolben
- 32: Bohrung
- 34: Durchbruch
- 36: Durchbruch
- 38: Belaghaltestift
- 40: Belaghaltestift
- 42: Durchbruch
- 46: Abschnitt
- 48: Abschnitt
- 50: Vorsprung
- 52: Versteifungsrippe
- 54: Ansatz
- 56: Ansatz
- 58: Ansatz
- 60: Ansatz
- 62: Anlagefläche
- 64: Feder
- 66: Seitenteil
- 68: Seitenteil
- 70: Verbindungsabschnitt
- 71: Verbindungsabschnitt
- 72: Verbindungsabschnitt
- 73: Verbindungsabschnitt
- 74: zentraler Teil
- 76: zentraler Teil
- 77: Schenkel
- 78: Schenkel
- 79: Schenkel
- 80: Schenkel
- 82: Ansatz
- 83: Ausnehmung
- 84: Schenkel
- 85: Ausnehmung
- 86: Schenkel
- 87: Zunge
- 88: Endabschnitt
- 89: Absatz
- 90: Endabschnitt
- 92: Bremsgehäuse
- 94: Belaghaltestift
- 96: Belaghaltestift
- 98: Schenkel
- 100: Bremsbelag
- 102: Bremsbelag
- 164: Feder
- 166: Öse
- 168: Endabschnitt
- 170: Noppen
- 172: Symmetrieachse
- 174: Symmetrieachse
- 176: Stab
- 178: Stab
- 179: Abstützfläche
- 182: Schenkel
- 184: Schenkel
- 186: Abstützfläche
- 188: Ausnehmung
- 190: Schenkel
- 192: Schenkel
- 193: Umfangsrichtung
- 194: Verbindungssteg
- 196: Verbindungssteg
- 198: Winkel
- 200: Abschnitt
- 202: Strebe
- 204: Strebe
- 206: Verbindungssteg
- 208: Bremsscheibenfläche
- 210: Verbindungsteg
- 212: Segment
- 214: Segment
- 216: Strebe
- 218: Strebe
- 220: Verbindungsschenkel
- 222: Verbindungsschenkel

## Patentansprüche

1. Teilbelag-Scheibenbremse für Kraftfahrzeuge, mit einem bolzengeführten Bremsgehäuse (2, 92) von im wesentlichen U-förmiger Gestalt, das von zwei radial verlaufenden Schenkeln (4, 6, 98) gebildet wird, die über einen Brückenabschnitt (8) miteinander verbunden sind, wobei ein erster radialer Schenkel (4) des Bremsgehäuses (2, 92) eine Bremsbetätigungseinrichtung trägt und mit zwei beiderseits einer Bremsscheibe (24) anzuordnenden Bremsbacken (26, 28, 100, 102), die von Belaghaltestiften (38, 40, 94, 96) gehalten sind und deren Rückenplatten (27, 29) Ansätze (54, 56, 58, 60) bilden, die, in Umfangsrichtung (193) gesehen, von außen gegen die Belaghaltestifte (38, 40, 94, 96) anlegbar sind, zur Übertragung von Bremskräften auf die Belaghaltestifte (38, 40, 94, 96), wobei zumindest ein Ansatz (54, 56, 58, 60) den betreffenden Belaghaltestift (38, 40, 94, 96) zumindest teilweise umgreift, dadurch **gekennzeichnet**, daß die Ansätze (54, 56, 58, 60) einen sichelförmigen Abschnitt bilden, der mit einer teilkreisförmigen Anlagefläche (62) die Belaghaltestifte (38, 40, 94, 96) umgreift.

2. Teilbelag-Scheibenbremse nach Anspruch 1, dadurch **gekennzeichnet**, daß das Bremsgehäuse (2) im Bereich des Brückenabschnitts (8) Ausnehmungen (34, 36) aufweist, in denen die Belaghaltestifte (38, 40) angeordnet sind.

3. Teilbelag-Scheibenbremse nach Anspruch 1 oder 2, dadurch **gekennzeichnet**, daß das Bremsgehäuse (2) im Brückenabschnitt (8) einen zentralen Durchbruch (42) aufweist.

4. Teilbelag-Scheibenbremse nach Anspruch 3, dadurch **gekennzeichnet**, daß zwischen dem Bremsgehäuse (2) und den Bremsbacken (26, 28) eine Niederhaltefeder (64, 164) angeordnet ist, die in den zentralen Durchbruch (42) eingreift.

5. Teilbelag-Scheibenbremse nach einem der vorhergehenden Ansprüche, dadurch **gekennzeichnet**, daß das Bremsgehäuse (92) seitliche U-förmige Abschnitte bildet, wobei die Belaghaltestifte (94, 96) in den Schenkeln der U-förmigen Abschnitte gelagert sind.

6. Teilbelag-Scheibenbremse nach Anspruch 4, dadurch **gekennzeichnet**, daß die Niederhaltefeder (64) einen rahmenartigen Abschnitt bildet, der einen Ansatz (82) zum Eingriff in den Durchbruch (42) aufweist.

7. Teilbelag-Scheibenbremse nach Anspruch 6, dadurch **gekennzeichnet**, daß der rahmenartige Abschnitt (2) parallel verlaufende, Seitenteile (66, 68) aufweist, zur Auflage auf Teile der Bremsbacken (26, 28), wobei die Seitenteile (66, 68) über Verbindungsabschnitte (70, 71, 72, 73) mit zentralen Teilen (74, 76) der Niederhaltefeder (64) verbunden sind und die Verbindungsabschnitte (70, 71, 72, 73) in einem stumpfen Winkel zu diesem verlaufen.

8. Teilbelag-Scheibenbremse nach Anspruch 7, dadurch **gekennzeichnet**, daß ausgehend von den Seitenteilen (66, 68) zumindest zwei Schenkel (77, 78, 79, 80) in das Innere des rahmenartigen Abschnitts vorspringen.

9. Teilbelag-Scheibenbremse nach einem der Ansprüche 6 bis 8, dadurch **gekennzeichnet**, daß der Ansatz (82) Schenkel (84, 86) aufweist, die jeweils hinter eine in der Begrenzung des Durchbruchs (42) gebildete Ausnehmung (83, 85) greifen.

10. Teilbelag-Scheibenbremse nach einem der Ansprüche 6 bis 9, dadurch **gekennzeichnet**, daß die Niederhaltefeder (64) eine Zunge (87) aufweist, die auf einen Ansatz (89) auflegbar ist, der in einem Schenkel (4) des Bremsgehäuses (2) ausgebildet ist.

11. Teilbelag-Scheibenbremse nach einem der Ansprüche 1 bis 5, dadurch **gekennzeichnet**, daß eine am Bremsgehäuse (2) gehaltene Niederhaltefeder (164) für die Bremsbacken (26, 28) einstückig aus Federdraht gebildet ist und mit zwei in Umfangsrichtung (193) beabstandeten, sich im wesentlichen axial erstreckenden Schenkeln (190, 192) an den Bremsbacken (26, 28) abstützbar ist und zumindest einen sich an dem Bremsgehäuse (2) abstützenden Abschnitt (200) aufweist, und daß an den Schenkeln (190, 192) zwei sich kreuzförmig überlappende, im wesentlichen in Umfangsrichtung (193) erstreckende Streben (202, 204) des Abschnitts (200) angeordnet sind, die in zwei sich im wesentlichen axial erstreckende, in Umfangsrichtung (193) beabstandete Schenkel (182, 184) des Abschnitts (200) übergehen, und daß die Schenkel (182, 184) sich gegen eine radial innenliegende Abstützfläche (186) des Brückenabschnitts (8) abstützen.

12. Teilbelag-Scheibenbremse nach Anspruch 11, dadurch **gekennzeichnet**, daß der Abschnitt (200) geschlossen ausgeführt ist, indem ein sich im wesentlichen in Umfangsrichtung (193) über der äußeren Bremsbacke (28) erstreckender Verbindungssteg (210) die beiden Schenkel (182, 184) des Abschnitts (200) verbindet.

13. Teilbelag-Scheibenbremse nach Anspruch 11 oder 12, dadurch **gekennzeichnet**, daß ein axial über die Betätigungseinheit (30, 32) ragender Endabschnitt (168) der Niederhaltefeder (164) an einem auf dem Schenkel (4) aufsitzenden, sich radial erhebenden Noppen (170) befestigt ist.

14. Teilbelag-Scheibenbremse nach einem der Ansprüche 11 bis 13, dadurch **gekennzeichnet**, daß der Endabschnitt (168) zwei sich kreuzförmig überlappende, im wesentlichen in Umfangsrichtung (193) erstreckende weitere Streben (216, 218) aufweist, die an den in Umfangsrichtung (193) beabstandeten auf den Bremsbacken (26, 28) aufliegenden Schenkeln (190, 192) angeordnet sind und deren Segmente (212, 214) sich gegen eine Abstützfläche (186) des Brückenabschnitts (8) abstützen.

15. Teilbelag-Scheibenbremse nach einem der Ansprüche 11 bis 14, dadurch **gekennzeichnet**, daß die innenliegende Abstützfläche (186) des Bremsgehäuses (2) eine kreissegmentförmige Ausnehmung (188) begrenzt.

16. Teilbelag-Scheibenbremse nach einem der Ansprüche 11 bis 15, dadurch **gekennzeichnet**, daß der Endabschnitt (168) den Noppen (170) mit einer Öse (166) umschlingt.

17. Teilbelag-Scheibenbremse nach einem der Ansprüche 11 bis 16, dadurch **gekennzeichnet**, daß die zwei Drahtenden (228, 230) der Niederhaltefeder (164) im Bereich der Öse (166) angeordnet sind.

18. Teilbelag-Scheibenbremse nach Anspruch 17, dadurch **gekennzeichnet**, daß die Drahtenden (228, 230) auf der Rückseite des Noppens (170) übereinander liegen und frei enden.

19. Teilbelag-Scheibenbremse nach Anspruch 17, dadurch **gekennzeichnet**, daß die Drahtenden (228, 230) verschweißt sind.

20. Teilbelag-Scheibenbremse nach Anspruch 17, dadurch **gekennzeichnet**, daß die Drahtenden (228, 230) verlötet sind.

21. Teilbelag-Scheibenbremse nach einem der Ansprüche 11 bis 20, dadurch **gekennzeichnet**, daß der Endabschnitt (168) zwei von der Öse (166) wegragende, sich axial erstreckende, nebeneinander liegende Stäbe (176, 178) aufweist, die sich zwischen dem Noppen (170) und der inneren Bremsbacke (26) überlappen.

22. Teilbelag-Scheibenbremse nach Anspruch 21, dadurch **gekennzeichnet**, daß die Stäbe (176, 178) zumindest teilweise in dem der inneren Bremsbacke (26) benachbarten Bereich auf dem Bremsgehäuse (2) aufliegen und die Öse (166) den Noppen (170) mit geringem Axialspiel (S) umgreift.

23. Teilbelag-Scheibenbremse nach einem der Ansprüche 13 bis 22, dadurch **gekennzeichnet**, daß der Noppen (170) rechteckförmig ausgebildet ist.

24. Teilbelag-Scheibenbremse nach Anspruch 23, dadurch **gekennzeichnet**, daß die Öse (166) rechteckförmig ausgebildet ist.

## Claims

1. A spot-type disc brake for automotive vehicles including a pin-guided brake housing (2, 92) of substantially U-shaped configuration, being formed of two radially extending stems (4, 6, 98) which are interconnected through a bridge section (8), a first radial stem (4) of the brake housing (2, 92) carrying a brake actuating device, and including two brake shoes (26, 28, 100, 102) to be positioned on either side of a brake disc (24) and secured by pad retaining pins (38, 40, 94, 96) and the back plates (27, 29) of which form attachments (54, 56, 58, 60) which, as viewed in circumferential direction (193), are movable from the outside to abut against the pad retaining pins (38, 40, 94,96) in order to transmit brake forces to the pad retaining pins (38, 40, 94, 96), with at least one attachment (54, 56, 58, 60) embracing the respective pad retaining pin (38, 40, 94, 96) at least partially, **characterized** in that the attachments (54, 56, 58, 60) form a sickle-shaped section which embraces the pad retaining pins (38, 40, 94, 96) with a sector-shaped abutment surface (62).

2. A spot-type disc brake as claimed in claim 1,
**characterized** in that the brake housing (2) is provided with recesses (34, 36) in the area of the bridge section (8) in which the pad retaining pins (38, 40) are positioned.

3. A spot-type disc brake as claimed in claim 1 or claim 2,
**characterized** in that the brake housing (2) is provided with a central opening (42) in the bridge section (8).

4. A spot-type disc brake as claimed in claim 3,
**characterized** in that a holding-down spring (64, 164) engaging the central opening (42) is arranged between the brake housing (2) and the brake shoes (26, 28).

5. A spot-type disc brake as claimed in any one of the preceding claims,
**characterized** in that the brake housing (92) is formed with U-shaped lateral sections, the pad retaining pins (94, 96) being supported in the stems of the U-shaped sections.

6. A spot-type disc brake as claimed in claim 4,
**characterized** in that the holding-down spring (64) is formed with a frame-shaped section which is furnished with an attachment (82) for engagement in the opening (42).

7. A spot-type disc brake as claimed in claim 6,
**characterized** in that the frame-shaped section (2) is provided with parallel extending lateral portions (66, 68) to rest on portions of the brake shoes (26, 28), the lateral portions (66, 68) being connected to central portions (74, 76) of the holding-down spring (64) through connecting sections (70, 71, 72, 73) and the connecting sections (70, 71, 72, 73) extending at an obtuse angle in respect of the former.

8. A spot-type disc brake as claimed in claim 7,
**characterized** in that, starting from the lateral portions (66, 68), at least two stems (77, 78, 79, 80) project into the inner space of the frame-shaped section.

9. A spot-type disc brake as claimed in any one of the claims 6 to 8,
**characterized** in that the attachment (82) is composed of stems (84, 86) which make each catch behind a recess (83, 85) formed in the boundary of the opening (42).

10. A spot-type disc brake as claimed in any one of the claims 6 to 9,
**characterized** in that the holding-down spring (64) includes a tongue (87) which is movable to rest on an attachment (89) which is provided in a stem (4) of the brake housing (2).

11. A spot-type disc brake as claimed in any one of the claims 1 to 5,
**characterized** in that a holding-down spring (164) for the brake shoes (26, 28) which is retained at the brake housing (2) is formed in one piece of spring wire and is adapted to be supported at the brake shoes (26, 28) with two stems (190, 192) being spaced from each other in circumferential direction (193) and extending substantially in axial direction and includes at least one section (200) which bears against the brake housing (2), and in that at the stems (190, 192) two struts (202, 204) of the section (200) are positioned which overlap each other cross-wise, which extend substantially in circumferential direction (193) and which pass over into two struts (182, 184) of the section (200) which extend substantially in axial direction and are spaced from each other in circumferential direction (193), and in that the stems (182, 184) take support on a radially internally positioned supporting surface (186) of the bridge section (8).

12. A spot-type disc brake as claimed in claim 11,
**characterized** in that the section (200) is designed of a closed type by a connecting web (210), which extends substantially in circumferential direction (193) above the external brake shoe (28), interconnecting the two stems (182, 184) of the section (200).

13. A spot-type disc brake as claimed in claim 11 or claim 12,
**characterized** in that an end section (168) of the holding-down spring (164) which projects axially above the actuating unit (30, 32) is secured to a nub (170) which is seated on the stem (4) and which stands up in radial direction.

14. A spot-type disc brake as claimed in any one of the claims 11 to 13,
**characterized** in that the end section (168) is furnished with two further struts (216, 218) which overlap each other cross-wise, which extend substantially in circumferential direction (193) and which are positioned on the stems (190, 192) being spaced from each other in circumferntial direction (193) and resting on the brake shoes (26, 28) and whose segments (212, 214) take support on a supporting surface (186) of the bridge section (8).

15. A spot-type disc brake as claimed in any one of the claims 11 to 14,
**characterized** in that the internally positioned supporting surface (186) of the brake housing (2) confines a circular segment-shaped recess (188).

16. A spot-type disc brake as claimed in any one of the claims 11 to 15,
**characterized** in that the end section (168) makes grip around the nub (170) with an ear (166).

17. A spot-type disc brake as claimed in any one of the claims 11 to 16,
**characterized** in that the two wire ends (228, 230) of the holding-down spring (164) are arranged in the area of the ear (166).

18. A spot-type disc brake as claimed in claim 17,
**characterized** in that the wire ends (228, 230) are positioned one on top of the other and end freely on the back side of the nub (170).

19. A spot-type disc brake as claimed in claim 17,
**characterized** in that the wire ends (228, 230) are welded together.

20. A spot-type disc brake as claimed in claim 17,
**characterized** in that the wire ends (228, 230) are soldered together.

21. A spot-type disc brake as claimed in any one of the claims 11 to 20,
**characterized** in that the end section (168) is furnished with two rods (176, 178) projecting away from the ear (166), extending in axial direction and positioned side by side which overlap each other between the hub (170) and the internal brake shoe (26).

22. A spot-type disc brake as claimed in claim 21,
**characterized** in that the rods (176, 178) rest at least partly on the actuating housing (2) in the area adjacent to the internal brake shoe (26), and in that the ear (166) makes grip around the hub (170) with a slight axial play (S).

23. A spot-type disc brake as claimed in any one of the claims 13 to 22,
**characterized** in that the hub (170) has a rectangular shape.

24. A spot-type disc brake as claimed in claim 23,
**characterized** in that the ear (166) has a rectangular shape.

## Revendications

1. Frein à disque à garniture partielle pour véhicules automobiles, comprenant un carter de frein (2, 92) guidé sur des axes, présentant une forme essentiellement en U, formé par deux branches (4, 6, 98) s'étendant radialement, reliées l'une à l'autre par l'intermédiaire d'une section de pontage (8), une première branche radiale (4) du carter de frein (2, 92) portant un dispositif d'actionnement du frein, et comprenant deux plaquettes de frein (26, 28, 100, 102) devant être disposées de chaque côté du disque de frein (24), les plaquettes étant maintenues par des goupilles (38, 40, 94, 96) de maintien des plaquettes de frein et leurs plaques dorsales (27, 29) présentant des appendices (54, 56, 58, 60) qui peuvent être amenés, de l'extérieur dans le sens de la circonférence (193), en contact avec les goupilles (38, 40, 94, 96) de maintien des plaquettes en vue de la transmission des efforts de freinage sur ces goupilles (38, 40, 94, 96) de maintien des plaquettes, l'un au moins des appendices (54, 56, 58, 60) entourant au moins partiellement la goupille correspondante (38, 40, 94, 96) de maintien des plaquettes,
caractérisé en ce que les appendices (54, 56, 58, 60) forment une partie en forme de faucille dont une face d'appui (62) en forme d'arc de cercle entoure les goupilles (38, 40, 94, 96) de maintien des plaquettes.

2. Frein à disque à garniture partielle selon la revendication 1, caractérisé en ce que le carter de frein (2) présente, dans la région de la section de pontage (8), des lumières (34, 36) dans lesquelles sont agencées les goupilles (38, 40) de maintien des plaquettes.

3. Frein à disque à garniture partielle selon l'une des revendications 1 ou 2, caractérisé en ce que le carter de frein (2) comporte, dans la section de pontage (8) une lumière centrale (42).

4. Frein à disque à garniture partielle selon la revendication 3, caractérisé en ce qu'un ressort de maintien (64, 164) est disposé entre le carter de frein (2) et les plaquettes de frein (26, 28) et s'engage dans la lumière centrale (42).

5. Frein à disque à garniture partielle selon l'une des revendications précédentes, caractérisé en ce que le carter de frein (92) présente des sections latérales en forme de U, les goupilles (94, 96) de maintien des plaquettes étant supportées dans les branches des sections latérales en U.

6. Frein à disque à garniture partielle selon la revendication 4, caractérisé en ce que le ressort de maintien (64) présente une partie en forme de cadre comportant un appendice (82) destiné à s'engager dans la lumière (42).

7. Frein à disque à garniture partielle selon la revendication 6, caractérisé en ce que la partie en forme de cadre comporte des parties latérales parallèles (66, 68) prévues pour l'appui sur des parties des plaquettes de frein (26, 28), les parties latérales (66, 68) étant reliées, par l'intermédiaire de segments de liaison (70, 71, 72, 73), à des parties centrales (74, 76) du ressort de maintien (64), et en ce que les segments de liaison (70, 71, 72, 73) forment un angle obtus avec celles-ci.

8. Frein à disque à garniture partielle selon la revendication 7, caractérisé en ce que, partant des parties latérales (66, 68), au moins deux branches (77, 78, 79, 80) font saillie vers l'intérieur de la partie en forme de cadre.

9. Frein à disque à garniture partielle selon l'une des revendications 6 à 8, caractérisé en ce que l'appendice (82) comporte des branches (84, 86) s'engageant respectivement derrière un évidement (83, 85) ménagé dans la lisière de la lumière (42).

10. Frein à disque à garniture partielle selon l'une des revendications 6 à 9, caractérisé en ce que le ressort de maintien (64) comporte une languette (87) pouvant s'appuyer sur un appendice (89) formé sur une branche (4) du carter de frein (2).

11. Frein à disque à garniture partielle selon l'une des revendications 1 à 5, caractérisé en ce qu'un ressort de maintien (164) pour les plaquettes de frein (26, 28), supporté par le carter de frein (2), est réalisé d'un seul tenant à partir d'un morceau de fil-ressort, est capable de s'appuyer sur les plaquettes de frein (26, 28) par deux branches (190, 192) espacées l'une de l'autre dans le sens de la circonférence (193) et s'étendant essentiellement axialement, et comporte au moins une section (200) s'appuyant sur le carter de frein (2), et en ce que deux tiges (202, 204) de la section (200) se recouvrant en forme de croix et s'étendant essentiellement dans le sens de la circonférence (193), sont agencées sur les branches (190, 192), ces tiges rejoignant deux branches (182, 184) de la section (200) qui s'étendent essentiellement axialement et sont espacées l'une de l'autre dans le sens de la circonférence (193), et en ce que les branches (182, 184) s'appuient sur une face d'appui (186) radialement intérieure de la section de pontage (8).

12. Frein à disque à garniture partielle selon la revendication 11, caractérisé en ce que la section (200) est exécutée sous forme d'une section fermée grâce au fait qu'une traverse de liaison (210) s'étendant essentiellement dans le sens de la circonférence (193) au-dessus de la plaquette de frein extérieure (28) relie les deux branches (182, 184) de la section (200) l'une à l'autre.

13. Frein à disque à garniture partielle selon l'une des revendications 11 ou 12, caractérisé en ce qu'une partie terminale (168) du ressort de maintien, qui fait saillie axialement par rapport à l'unité d'actionnement (30, 32), est fixée sur un ergot (170) saillant radialement de l'une des branches (4).

14. Frein à disque à garniture partielle selon l'une des revendications 11 à 13, caractérisé en ce que la partie terminale (168) comporte deux autres tiges (216, 218) se recouvrant en forme de croix, s'étendant essentiellement dans le sens de la circonférence (193), agencées au niveau des branches (190, 192) espacées l'une de l'autre dans le sens de la circonférence (193) et s'appuyant sur les plaquettes de frein (26, 28), les segments (212, 214) de ces tiges prenant appui sur une face d'appui (186) de la section de pontage (8).

15. Frein à disque à garniture partielle selon l'une des revendications 11 à 14, caractérisé en ce que la face d'appui intérieure (186) du carter de frein (2) délimite un évidement (188) en forme de segment de cercle.

16. Frein à disque à garniture partielle selon l'une des revendications 11 à 15, caractérisé en ce qu'un oeil (166) de la partie terminale (168) entoure l'ergot (170).

17. Frein à disque à garniture partielle selon l'une des revendications 11 à 16, caractérisé en ce que les deux extrémités du fil (228, 230) du ressort de maintien (164) sont disposées dans la section de l'oeil (166).

18. Frein à disque à garniture partielle selon la revendication 17, caractérisé en ce que les extrémités de fil (228, 230) se recouvrent à l'arrière de l'ergot (170) et se terminent par des extrémités libres.

19. Frein à disque à garniture partielle selon la revendication 17, caractérisé en ce que les extrémités (228, 230) du fil sont soudées.

20. Frein à disque à garniture partielle selon la revendication 17, caractérisé en ce que les extrémités (228, 230) du fil sont brasées.

21. Frein à disque à garniture partielle selon l'une des revendications 11 à 20, caractérisé en ce que la partie terminale (168) comporte deux tiges contiguës (176, 178) s'étendant axialement en s'éloignant de l'oeil (166), qui se recouvrent entre l'ergot (170) et la plaquette de frein intérieure (26).

22. Frein à disque à garniture partielle selon la revendication 21, caractérisé en ce que les tiges (176, 178) reposent au moins partiellement sur le carter de frein (2), dans la zone adjacente à la plaquette de frein intérieure (26), et en ce que l'oeil (166) entoure l'ergot (170) avec un jeu axial (S) réduit.

23. Frein à disque à garniture partielle selon l'une des revendications 13 à 27, caractérisé en ce que l'ergot (170) présente une configuration rectangulaire.

24. Frein à disque à garniture partielle selon la revendication 23, caractérisé en ce que l'oeil (166) présente une configuration rectangulaire.
